# EUROPEAN PATENT APPLICATION

(11) **EP 2 840 821 A1**
(43) Date of publication of application: **25.02.2015**
(21) Application number: 13306158.0
(22) Date of filing: 20.08.2013
(51) Int. Cl.: H04W 12/06, H04L 9/08, H04M 1/725

(54) **Contactless communication object able to communicate with an NFC reader**

(71) Applicant: Gemalto SA, 92190 Meudon (FR)
(72) Inventor: Dany, Vincent, 13705 La Ciotat (FR); Mourtel, Christophe, 13705 La Ciotat (FR)

(57) **Abstract**

The present invention relates to a contactless communication object (10) able to communicate with an NFC reader (2), said object (10) having several virtual containers (C1,C2,C3) having common memory structure with at least a same memory sector (120,220,320) being intended to be accessed by readers (2) associated to different services, each of such memory sector (120,220,320) having at least a key (K1,K2,K3) associated to the corresponding service. According to the invention, the object is able to calculate different possible test data (TDi, i=1 to 3) using keys (K1,K2,K3) associated to the memory sector indicated in memory sector information (MSI) for each of the virtual containers (C1,C2,C3), and to detect the matching of the initialization data (ID) received from the reader (2) with one of the locally calculated test data (TDi), the authentication module (13) then taking the key (Km) corresponding to the matching test data (TDm), if ever detected, to terminate authentication.

## Description

### FIELD OF THE INVENTION

The present invention relates to a contactless communication object able to communicate with an NFC reader. More particularly, the invention relates to such an object having several virtual containers having common memory structure with at least a same memory sector being intended to be accessed by readers associated to different services. Each of such memory sector has at least a key associated to the corresponding service.

More precisely, the invention concerns such object when intended to receive, from reader, memory sector information on the memory sector to be accessed and initialization data depending on the key of the service corresponding to this reader. Said object includes an authentication module to use the key associated to the service corresponding to a reader to terminate the authentication with the appropriate key and data stored in appropriate virtual container.

The invention also concerns a method to determine a memory sector in a contactless communication object able to communicate with an NFC reader of the invention.

### BACKGROUND OF THE INVENTION

The invention addresses the Mifare4Mobile M4M context. This solution allows to have multiple Mifare service providers on a single NFC UICC. Several potentially active images are present in a single communication object as visible from the reader. Each image have the same functionalities in relation with a root application answering that the object is under Mifare standard to the reader.

However the M4M solution doesn't define the way to select the correct virtual card. Currently known solutions for this selection comprise fully manual ones. Here, the end user manually chooses the virtual card thanks to a mobile wallet. It also comprises solutions requiring infra modification. Here Wi-Fi area detection, tag reading or geographical localization data are used. Nevertheless precision is not satisfying in some cases and it does not cover situations where reader doesn't have defined localization (e.g. in a bus). Moreover all those selection methods do not work if handset's battery is empty. For example, it means that a end user with empty battery is not able to pass the turnstile to take the metro.

For empty battery issue, a solution would consist in modifying Mifare4Mobile application in order to define a default virtual card which will be automatically selected when battery is empty. It is however a partial workaround which works only for the most regular trip and which is applicable only for one service provider. For example, it allows to take the bus but entrance in the office building will not be possible.

Further alternative and advantageous solutions would, accordingly, be desirable in the art.

### SUMMARY OF THE INVENTION

The present invention aims at enabling the virtual container choice any time without end user interaction in Mifare4Mobile context at least.

For this purpose, the present invention relates to a contactless communication object comprising:
- a calculation module intended to calculate different possible test data using keys associated to the memory sector indicated in memory sector information for each of the virtual containers,
- a matching detection module to detect the matching of the initialization data received from the reader with one of the locally calculated test data,
the authentication module then taking the key corresponding to the matching test data, if ever detected, to terminate authentication.

The solution according to the invention is thus automatic and user friendly. Indeed it does not require any manual action to select the virtual card. The solution is furthermore cost-effective and easy to deploy because there is no requirement of any modification neither in the reader nor in the service provider back end system. Also the solution increases the reliability to 100% because it is working even when handset's battery is empty. With the invention, the idea is thus to select automatically in M4M application the correct virtual card at the time the handset is presented in front of the reader.

According to preferred implementation, the contactless communication object belongs to the group formed by NFC UICC card, eSE, NFC UICC emulated in an application processor.

These implementations enable to provide a satisfying level of security for the authentication. The most secure solutions are NFC UICC cards or embedded secure elements (eSE). However, in the Mifare4Mobile application, the microcontroller of the smartphone could emulate an NFC UICC while keeping a reasonable level of security.

Advantageously, the contactless communication object is of the Mifare Classic kind.

This corresponds to the preferred application for the invention.

The present invention also relates to a communication device having a contactless communication object according to the invention.

The invention also relates to a method to determine a memory sector in a contactless communication object able to communicate with an NFC reader, said object having several virtual containers having common memory structure with at least a same memory sector being intended to be accessed by readers associated to different services, each of such memory sector having at least a key associated to the corresponding service, said method comprising the steps of:
reception, from a reader, of a memory sector information on the memory sector to be accessed and initialization data depending on the key of the service corresponding to this reader,
authentication using the key associated to the service corresponding to a reader and data stored in appropriate virtual container,
said method being **characterized in that** it further includes steps of:
   - calculation of different possible test data using keys associated to the memory sector indicated in memory sector information for each of the virtual containers,
   - matching detection detecting the matching of the initialization data received from the reader with one of the locally calculated test data,
the authentication step then taking the key corresponding to the matching test data, if ever detected, to terminate authentication.

Such a method implemented in the contactless communication device enables an automatic selection of the virtual container without needing any change in the readers or on the service provider side.

According to a specific feature, the step of calculating different possible test data using keys associated to the memory sector indicated in memory sector information for each of the virtual containers uses preliminary calculated elements.

This feature enables to speed up the calculations.

According to an advantageous feature, the step of calculating different possible test data using keys associated to the memory sector indicated in memory sector information for each of the virtual containers uses an historic of the matching containers.

This enables to speed up the matching by avoiding to calculate the whole set of possibilities in some specific situation. In particular, it enables to calculate the last historically matching container first and then the others. If the user has not moved, the matching will be faster. To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 shows schematically a context in which the invention is advantageously implemented;
- Figure 2 represents schematically the content of a contactless communication object of the invention;
- Figure 3 shows a schematic flowchart of the method of the invention.

### DETAILED DESCRIPTION OF EMBODIMENTS OF THE INVENTION

The same elements have been designated with the same reference numerals in the different drawings. For clarity, only those elements and steps which are useful to the understanding of the present invention have been shown in the drawings and will be described.

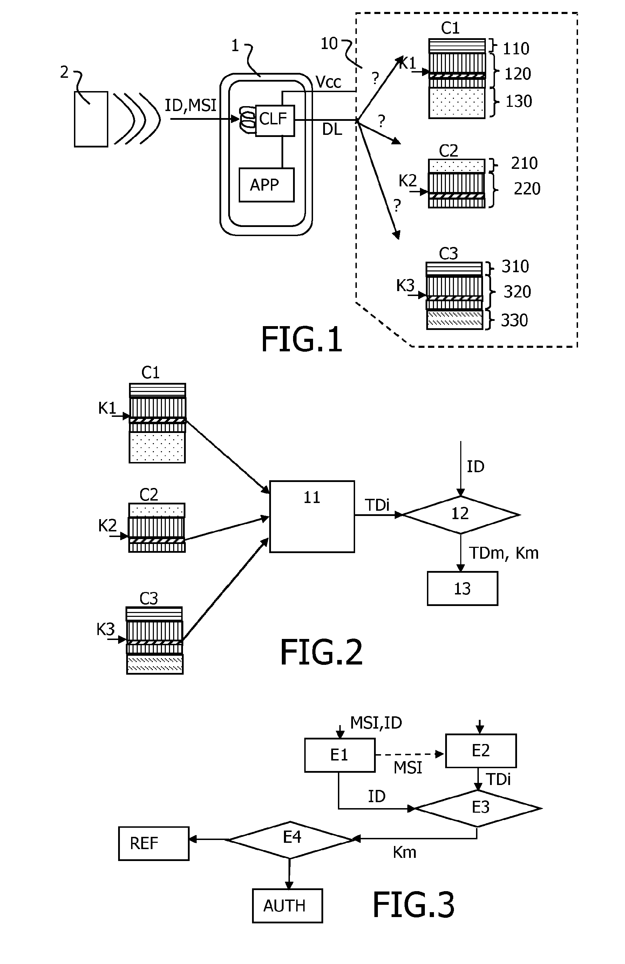

FIG. 1 schematically shows a context in which the invention is advantageously implemented. It comprises a communication device 1 having inside a contactless communication object 10 of the type to which the present invention is applied as an embodiment.

As it comprises the contactless communication object 10, the communication device 1 is able to communicate with an NFC reader 2. For this purpose, it also comprises a contactless frontend CLF, itself connected to at least an application APP and to the contactless communication object 10. This connection is, for example, according to known technology comprising at least a supply line Vcc and a data line DL. Others implementations where the contactless communication object would be emulated in the communication device itself are also concerned. In this last case, the connection protocol would be different but also according to technology known in the field.

It has to be noted here that the contactless frontend CLF is here represented inside the communication device 1 but it can also been implemented inside the contactless communication object itself. This relates in particular to fully contactless micro-SD card as deployed in mobile banking. Those device have integrated own CLF. In this last case, the contactless communication object 10 is independent and able to communicate directly with a reader 2.

The contactless communication object 10 has several virtual containers C1, C2, C3 having common memory structure 110/120/130, 210/220/230, 310/320/330 with at least a same memory sector 120, 220, 320 being intended to be accessed by readers 2 associated to different services. Typically, this situation is encountered when several public transportation services are addressed by the contactless communication device.

For example, the user has registered in Paris, London and Berlin for public transportation. As soon as the readers are all appealing the same memory sector in any of those places, the problem solved by the invention occurs.

Indeed there is currently no mean to select the right memory sector in one of the three containers C1, C2, C3 except by using external inputs like questioning the user through a screen display or like geo-localization data.

The context of the invention is such that each of such memory sectors 120, 220, 320 has at least a key K1, K2 and K3 associated to the corresponding service. This key has to be used in order to proceed to the necessary authentication of the object 10 with the reader 2.

For example, container C1 contains user access control data 110, Paris' public transportation data 120 and supermarket A loyalty data 130. Container C2 contains supermarket B loyalty data 210 and London's public transportation data 220. At last container C3 contains user access control data 310, Berlin's public transportation data 320 and cinema loyalty data 330.

Any authentication request from the public transportation reader 2 comprises memory sector information MSI designating the memory sector to be used for authentication and identification data ID to enable the authentication to be performed.

As symbolized by the arrow, the memory sector information MSI addresses always the same memory sector anyone of the container C1,C2,C3 is concerned. There is no means for the contactless communication object 10 to know which one of the three corresponding memory sector in each of the container C1,C2,C3 is concerned by the authentication request from the reader 2 and thus which associated key has to be used.

Figure 2 shows schematically the content of a contactless communication object of the invention. It comprises a calculation module 11 able to read in the different containers the keys K1, K2, K3 in memory sectors as indicated in memory sector information. Read keys are used to calculate different possible test data TDi, i=1 to 3 here.

These test data TDi are provided as input to a matching detection module 12 to detect the matching of the initialization data ID received from the reader 2 with one of the locally calculated test data TDm.

The contactless communication object includes an authentication module 13 taking the key corresponding to the matching test data TDm, if ever detected, to terminate authentication.

Figure 3 show a flowchart of the method of the invention as implemented in a contactless communication object of the invention. In a first step E1, memory sector information on the memory sector to be accessed and initialization data depending on the key of the service corresponding to this reader are received from a reader.

Before this reception or subsequently, it is performed a step E2 of calculation of different possible test data TDi using keys Ki associated to the memory sector indicated in memory sector information MSI for each of the virtual containers. When this step is not performed by default from the different similar memory sector but only once a request from a reader is received, the memory sector information MSI is provided for the calculation step E2. This is shown in dashed line on figure 3.

In a step E3, matching detection detecting the matching of the initialization data ID received from the reader 2 with one TDm of the locally calculated test data TDi.

This step enables to provide the right key Km corresponding to the matching test data TDm to an authentication step E4. This authentication step consists in performing a known process of authentication using the matching key Km. It can then result in a refusal REF or in an authentication AUTH of the pair reader/object.

More precisely, when Mifare4Mobile context is addressed by the invention, the card will analyze cryptogram sent by the reader during authenticate in order to select the correct virtual card.

Indeed the contactless communication object, here a card, includes a random number generator for generating a challenge nonce sent by the tag in clear. Thus at that time the key for authentication is not yet needed.

The reader associated with a given service provided by a given service provider then proceeds to an authentication process. During this, said challenge nounce serves for the reader to calculate a cryptogram using at least a key associated to the given service. For this purpose, said reader has a key bank including the tag key.

This cryptogram is then sent to the card. The accessed service will thus depend on information given by the reader.

When receiving answer from reader comprising a cryptogram calculated from the nounce among others, the card can compute all different possible cryptograms for each virtual card. It enables to establish which one was used by the reader and finally finish the authentication with appropriate key.

The invention thus enables to provide NFC UICC having multiple Mifare service providers and means to select one or the other automatically and reliably.

With the invention, selection is always possible even in case battery is empty because the required calculations can be performed as soon as the card is in the field of a reader. Supply is of the "power by the field" kind.

In the above detailed description, reference is made to the accompanying drawings that show, by way of illustration, specific embodiments in which the invention may be practiced. These embodiments are described in sufficient detail to enable those skilled in the art to practice the invention. It is to be understood that the location or arrangement of individual elements within disclosed embodiment may be modified without departing from the spirit and scope of the invention. The previous detailed description is, therefore, not to be taken in a limiting sense, and the scope of the present invention is defined only by the appended claims, appropriately interpreted, along with the full range of equivalents to which the claims are entitled.

## Claims

1. Contactless communication object (10) able to communicate with an NFC reader (2), said object (10) having several virtual containers (C1,C2,C3) having common memory structure with at least a same memory sector (120,220,320) being intended to be accessed by readers (2) associated to different services, each of such memory sector (120,220,320) having at least a key (K1,K2,K3) associated to the corresponding service,
said object (10) being intended to receive, from reader (2), memory sector information (MSI) on the memory sector to be accessed and initialization data (ID) depending on the key of the service corresponding to this reader (2),
said object (10) including an authentication module (13) to use the key (Km) associated to the service corresponding to a reader (2) to terminate the authentication with the appropriate key (Km) and data stored in appropriate virtual container (Cm),
said object (10) being **characterized in that** it further includes:
- a calculation module (11) intended to calculate different possible test data (TDi, i=1 to 3) using keys (K1,K2,K3) associated to the memory sector indicated in memory sector information (MSI) for each of the virtual containers (C1,C2,C3),
- a matching detection module (12) to detect the matching of the initialization data (ID) received from the reader (2) with one of the locally calculated test data (TDi),
the authentication module (13) then taking the key (Km) corresponding to the matching test data (TDm), if ever detected, to terminate authentication.

2. Contactless communication object, wherein it belongs to the group formed by NFC UICC card, eSE, NFC UICC emulated in an application processor.

3. Contactless communication object, wherein it is of the Mifare Classic kind.

4. Communication device (1) having a contactless communication object (10) according to one of the preceding claims.

5. Method to determine a memory sector in a contactless communication object (10) able to communicate with an NFC reader (2), said object (10) having several virtual containers (C1,C2,C3) having common memory structure with at least a same memory sector being intended to be accessed by readers (2) associated to different services, each of such memory sector having at least a key (K1,K2,K3) associated to the corresponding service, said method comprising the steps of:
- reception (E1), from a reader (2), of a memory sector information (MSI) on the memory sector to be accessed and initialization data (ID) depending on the key of the service corresponding to this reader (2), authentication (E4) using the key associated to the service corresponding to a reader and data stored in appropriate virtual container, said method being **characterized in that** it further includes steps of:
- calculation (E2) of different possible test data (TDi) using keys associated to the memory sector indicated in memory sector information (MSI) for each of the virtual containers (C1,C2,C3),
- matching detection (E3) detecting the matching of the initialization data (ID) received from the reader (2) with one of the locally calculated test data (TDi),
the authentication step (E4) then taking the key (Km) corresponding to the matching test data (TDm), if ever detected, to terminate authentication.

6. Method according to claim 5, wherein the step of calculating (E2) different possible test data (TDi, i=1 to 3) using keys (K1,K2,K3) associated to the memory sector indicated in memory sector information (MSI) for each of the virtual containers (C1,C2,C3) uses preliminary calculated elements.

7. Method according to claim 5, wherein the step of calculating (E2) different possible test data (TDi) using keys associated to the memory sector indicated in memory sector information for each of the virtual containers (C1,C2,C3) uses an historic of the matching containers.
